# EUROPÄISCHE PATENTSCHRIFT

(11) **EP 2 191 154 B1**
(45) Veröffentlichungstag und Bekanntmachung des Hinweises auf die Patenterteilung: **07.11.2012**
(21) Anmeldenummer: 08787112.5
(22) Anmeldetag: 11.08.2008
(51) Int. Cl.: F16C 29/04, F16H 59/02, F16H 63/30, F16C 29/00

(54) **WÄLZLAGERUNG FÜR AXIAL GEGENEINANDER VERSCHIEBBARE BAUTEILE, INSBESONDERE FÜR GETRIEBE-SCHALTELEMENTE**
ROLLER BEARING FOR COMPONENTS WHICH CAN BE DISPLACED AXIALLY IN RELATION TO ONE ANOTHER, IN PARTICULAR FOR SHIFT ELEMENTS OF GEARBOXES
PALIER À ROULEMENT POUR DES PIÈCES POUVANT ÊTRE DÉCALÉES AXIALEMENT LES UNES PAR RAPPORT AUX AUTRES, EN PARTICULIER POUR DES ÉLÉMENTS DE CHANGEMENT DE VITESSE

(30) Priorität: 12.09.2007 DE 102007043476
(43) Veröffentlichungstag der Anmeldung: 02.06.2010
(73) Patentinhaber: Schaeffler Technologies AG & Co. KG, 91074 Herzogenaurach (DE)
(72) Erfinder: NEHMEYER, Thomas, 90491 Nürnberg (DE)
(86) Internationale Anmeldenummer: PCT/EP2008/060538
(87) Internationale Veröffentlichungsnummer: WO 2009/033906

(56) Entgegenhaltungen:
- DE-A1- 3 402 523
- DE-A1- 10 359 962
- US-A- 3 876 265
- US-A- 4 705 491

## Beschreibung

### Gebiet der Erfindung

Die vorliegende Erfindung betrifft eine Wälzlagerung für axial gegeneinander verschiebbare Bauteile, insbesondere für Schaltelemente wie z.B. Schaltstangen oder Schaltschienen von Kraftfahrzeuggetrieben.

Mittels der genannten Schaltelemente werden bei Schaltwechselgetrieben von Kraftfahrzeugen die Bewegungen von Schalt- und/oder Wählhebeln auf die jeweiligen Schieberäder des Getriebes übertragen. Schaltstangen und Schaltschienen übertragen üblicherweise axiale Betätigungskräfte auf die an diesen Elementen fixierten Schaltgabeln und übertragen die aus dem Schaltvorgang resultierenden Reaktionskräfte auf das Getriebegehäuse. Für den Schaltvorgang müssen diese Elemente axial beweglich gelagert sein.

Aus der DE 2 656 822 A1 ist ein Gegenstand nach dem Oberbegrift des Anspruchs 1 bekannt.

Bekannte Lagerungen für Schaltstangen oder Schaltschienen können als Gleitlager oder als Wälzlager ausgebildet sein. Der Vorteil von Gleitlagerungen, die üblicherweise in Kunststoff ausgeführt sind, besteht insbesondere in ihrer Robustheit, den geringen Kosten und in der exakten Führung der Schaltelemente. Zudem weisen derartige Kunststofflagerungen den Vorteil einer akustischen Dämpfung des Schaltvorganges auf. Derartige Gleitlagerelemente sind bspw. in der DE 10 2004 002 804 B4 und in der DE 10 2006 032 782 A1 beschrieben. Die wesentlichen Nachteile von Gleitlagern bestehen in ihren erhöhten lastabhängigen Reibwerten, die im Interesse einer möglicht leichtgängigen Schaltbetätigung zu vermeiden sind.

Für die Lagerung der Schaltstangen oder Schaltschienen eignen sich auch Wälzlager, bei denen üblicherweise drei oder mehr definierte, in Längsbewegungsrichtung orientierte Nuten vorgesehen sind, in denen die Wälzkörper - meist sind dies Kugeln - geführt sind. Die fluchtend in Verschieberichtuna der Bauteile angeordneten Wälzkörper laufen, wie in DE3402523A1 beschrieben, bei im Querschnitt rechteckigen Schaltschienen innen meist auf einem Blechelement, das die Schaltschiene umgreift und so ausgeformt ist, dass sich zur Kugel hin Laufbahnen ergeben, welche die Au-βenkontur der Wälzkörper teilweise umschließen. Außen rollen die Wälzkörper hierbei in einer kreisrunden Führungshülse ab, die in das Getriebegehäuse eingepresst ist. [S.2, Zeile 11 - 14] Aufgrund ihres konstruktiven Aufbaus rollen die Wälzkörper in einer kreisrunden Zylinderhülse ab, welche die gesamte innere Lagereinheit umschließen muss und daher in ihrem kleinsten Durchmesser beschränkt ist. Die Parameter Kugelradius und Laufbahnradius definieren durch die dadurch erzeugte Berührungsfläche die maximal übertragbare Lagerkraft bzw. die zulässige Lagerbelastung. Dies gilt sowohl für die Laufbahn in der Außenhülse als auch für die Laufbahn im Innenblech bzw. in der Schaltstange.[S. 2, Zeile 32 bis Seite 3, Zeile 5]

Alternativ können die Kugellaufbahnen auch direkt in die Oberfläche einer Schaltstange eingebracht sein, wie dies in US4705491A1 und DE10359962A1 beschrieben ist. Derartige Wälzlagerungen ermöglichen gute Wirkungsgrade aufgrund einer geringen Lagerreibung und erhöhen damit den Schaltkomfort, da sie für eine sehr leichtgängige Längsführung der Schaltschiene sorgen können.

Wälzlagerungen für Schaltwellen, Schaltschienen und andere verdrehbare und/oder axial gegeneinander verschiebbare Teile sind in zahlreichen Ausführungsformen bekannt. Beispiele für solche Wälzlagerungen finden sich außer in den zuvor genannten Veröffentlichungen bspw. in US 24 00 374 A, in DE 87 01 204 U1, in EP 0 412 870 A1, in DE 39 40 488 A1, in JP 4 134920, in DE 100 53 987 A1 sowie in DE 102 15 873 A1.

Die günstigen Reibwerte der Wälzlagerungen sind nahezu lastunabhängig und liegen betragsmäßig deutlich unter den Reibwerten von bekannten Gleitlagerungen. Allerdings können durch die akustische Koppelung von Metallelementen wie Schaltschiene, Laufbleche, Kugeln, Zylinderbuchse, Getriebegehäuse etc. störende Geräusche beim Schaltvorgang von der Schiebemuffe direkt ins Getriebegehäuse und dadurch in den Fahrgastraum übertragen werden. Mehrreihige Wälzlagerungen reagieren zudem empfindlich auf Fluchtungsfehler der beiden Schaltschienenlager zueinander.

Eine Aufgabe der vorliegenden Erfindung wird darin gesehen, eine verbesserte Wälzlagerung für axial gegeneinander verschiebbare Bauteile zu liefern, die möglichst hohe Kräfte übertragen kann. Eine weitere Aufgabe der Erfindung besteht darin, eine Wälzlagerung zu liefern, die hinsichtlich der Geräuschübertragung zwischen den gegeneinander beweglichen Teilen optimiert ist.[S. 4, Zeile 31 - 33]

Diese Aufgabe wird durch eine Wälzlagerung mit den Merkmalen des Anspruchs 1 gelöst.

Zwischen Wälzkörpern und äußerem Bauteil ist eine nicht zylindrische, sondern jeweils die Konturen der Wälzkörper zumindest teilweise umschließende Außenhülse angeordnet. Die erfindungsgemäße Wälzlagerung für axial gegeneinander verschiebbare Bauteile, die insbesondere für Schaltstangen oder Schaltschienen von Kraftfahrzeuggetrieben vorgesehen sein kann, weist wenigstens zwei Reihen von jeweils fluchtend in Verschiebungsrichtung der Bauteile angeordneten Wälzkörper auf, die jeweils in Laufbahnen wälzen bzw. geführt sind, welche die Außenkontur der Wälzkörper teilweise umschlie-βen. Durch die um die Wälzkörper herum geformten Laufbahnen werden die Berührflächen zwischen Laufbahn und Wälzkörper erhöht, wodurch die Flächenpressung zwischen den Bauteilen reduziert ist; es können somit größere Kräfte sowie bei Bedarf auch Drehmomente übertragen werden.

Die Außenhülse mit drei Laufbahnen für zwei, drei oder mehr Reihen von Wälzkörpern weist den triovalen Querschnitt mit drei abschnittsweise kreissegmentförmigen Führungen bzw. Laufbahnen für die Wälzkörper auf, wodurch die exakte und symmetrische Führung der Kugeln gewährleistet ist. Hierdurch lässt sich die Schaltschiene besonders exakt führen. Zudem sind auch die übertragbaren Kräfte höher, da die Schaltschiene nach drei Seiten abgestützt wird. Entsprechend kann die Innenkontur drei im Querschnitt abschnittsweise kreissegmentförmige Führungen bzw. Laufbahnen für die Wälzkörper aufweisen, wodurch auch die Innenkontur bzw. das Innenblech zur Abstützung der Schaltschiene so gestaltet ist, dass möglichst geringe Flächenpressungen entstehen.

Ein besonderer Vorteil der vorliegenden Erfindung ist der Ausgleich von Fluchtungsfehlern durch die elastische Außenhülse. Wenn gegenüber liegend angeordnete Lagerbohrungen im Getriebe nicht exakt fluchten und/oder Winkelfehler aufweisen, dann führt die dadurch erzwungene Verkippung in mehrreihigen Lagern bei bekannten Bauformen häufig zu Lagerschäden und frühen Ausfällen der Lager durch Beschädigungen der Laufbahnen aufgrund der unzulässigen Überlastung. Diese nachteiligen Einflüsse einer nicht ausreichend exakten Fertigung können mit der vorliegenden Erfindung auf besonders effektive Weise ausgeschlossen werden. Seite 6, Absatz 1]

Da die Laufbahnen keine zylindrische Kontur aufweisen, ist eine Verdrehung der beiden gegeneinander verschiebbaren Bauteile verhindert, was die Übertragung von Drehmomenten ermöglicht.

Als Wälzkörper kommen Kugeln zum Einsatz, die jeweils in Laufbahnen geführt sind, die im Querschnitt Kreisringsegmente aufweisen, die mit den Durchmessern der Wälzkörper korrespondieren. Dadurch, dass die Laufbahnen im Querschnitt jeweils den Konturen der Kugeln angepasst sind, werden die Flächenpressungen durch die größeren sich berührenden Flächen reduziert, wodurch sich auch die Bauteilbelastung verringert.

Ein erstes Bauteil ist ein Gehäuse mit der darin angeordneten Außenhülse zur äußeren Führung der Wälzkörper. Ein zweites Bauteil kann insbesondere eine axial gegenüber dem ersten Bauteil bzw. dem Gehäuse verschiebbare Stange oder Schaltschiene sein, die eine Innenkontur zur Führung der Wälzkörper aufweist. Die erfindungsgemäße Wälzlagerung lässt sich mit Vorteil bei Schaltschienenlagerungen anwenden, so dass diese axial besser geführt ist.

Diese weitere Aufgabe der Erfindung wird dadurch gelöst, dass die Adapterhülse aus einem elastischen Werkstoff gefestigt ist, der die Geräuschübertragung zwischen innerem Bauteil und äußerem Bauteil dämpft. Die Adapterhülse ist in einer hohlzylindrischen Bohrung des ersten Bauteils bzw. Gehäuses spielfrei fixiert. Weiterhin weist die Adapterhülse eine Innenkontur auf, die der Außenkontur der Außenhülse zur Führung der Wälzkörper entspricht. Die Außenhülse zur äußeren Lagerung und Führung der Wälzkörper ist spielfrei in der Adapterhülse fixiert. Eine besonders gute Dämpfungswirkung lässt sich erzielen, wenn die Adapterhülse aus einem elastischen Werkstoff gefertigt ist. Als solcher Werkstoff kommt bspw. ein thermoplastischer Kunststoff mit ausreichender Elastizität bzw. mit ausreichenden Dämpfungseigenschaften in Frage. Insbesondere kommt als geeigneter Werkstoff jedoch auch ein elastomerer Kunststoff mit ausreichender Festigkeit und geringer Fließneigung in Frage, so dass die notwendigen elastischen Eigenschaften in ausreichendem Maße gewährleistet sind.

Die Innenkontur zur Führung der Wälzkörper kann weiterhin durch einen Lagerring gebildet sein, der am Außenumfang des zweiten Bauteils bzw. der Stange oder Schaltschiene fixiert ist. Alternativ hierzu kann die Innenkontur zur Führung der Wälzkörper durch Längsnuten gebildet sein, die in den Außenumfang des zweiten Bauteils bzw. der Stange oder Schaltschiene eingebracht sind. Hierzu können entsprechende Längsnuten in axialer Richtung in die Au-βenkontur der Stange oder Schaltschiene eingebracht sein, die dann als axiale Laufbahnen für die Wälzkörper bzw. Kugeln der Wälzlagerung dienen.

Weiterhin ist es von Vorteil, wenn die Wälzkörper durch einen Käfig gehalten und in ihrer Lage zueinander fixiert sind. Dieser Käfig ist jedoch nicht unverzichtbar, wenn er auch die Montage der Wälzkörper erheblich gegenüber einer Einzelbestückung mit Kugeln erleichtert. Der Käfig kann bspw. aus Blech bestehen. Ein geeigneter Werkstoff für den Käfig kann bspw. auch Polyamid (z.B. PA66) sein.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1: zeigt einen schematischen Querschnitt einer ersten Variante einer Wälzlagerung zur axialen Führung zweier gegeneinander verschiebbarer Bauteile, insbesondere mit einer Schaltschiene mit rechteckförmigem Querschnitt.
- Fig. 2: zeigt einen perspektivischen Teillängsschnitt der Wälzlagerung gemäß Fig. 1.
- Fig. 3: zeigt einen schematischen Längsschnitt der Wälzlagerung zur Verdeutlichung weiterer Details.
- Fig. 4: zeigt einen schematischen Längsschnitt einer zweiten Variante der Wälzlagerung mit einer Schaltstange ohne inneres Führungsblech.
- Fig. 5: zeigt einen schematischen Querschnitt der zweiten Variante aus Fig. 4.
- Fig. 6: zeigt eine perspektivische Darstellung der Wälzlagerung gemäß Fig. 4 und Fig. 5.

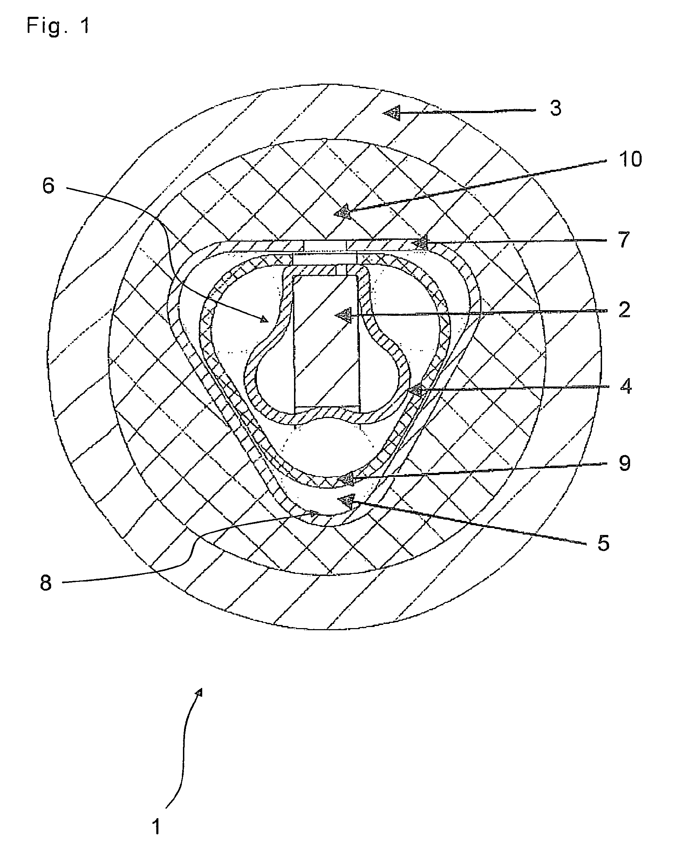

Die schematische Darstellung der Fig. 1 zeigt einen Querschnitt durch eine Ausführungsform einer erfindungsgemäßen Wälzlagerung 1, umfassend eine Schaltschiene 2 mit rechteckförmigem Querschnitt, die axial verschiebbar (d.h., senkrecht zur Zeichnungsebene) in einem Getriebegehäuse 3 gelagert ist. Am Außenumfang der Schaltschiene 2 ist ein Innenblech 4 angeordnet, das als innere Führung für die zeichnerisch nur schwach angedeuteten Wälzkörper 5 dient, die im vorliegenden Ausführungsbeispiel jeweils durch Kugeln gebildet sind. Das Innenblech 4 weist drei am Umfang verteilte Führungsabschnitte 6 auf, die axial verlaufen und im Querschnitt einen Kreissegmentabschnitt aufweisen, dessen Radius dem Radius der Wälzkörper 5 entspricht, so dass diese über einen definierten Bereich umfasst und geführt sind, wodurch die wirksame Flächenpressung zwischen Wälzkörpern 5 und Innenblech 4 bzw. dessen Führungsabschnitten 6 gegenüber einer herkömmlichen Axiallagerung deutlich reduziert ist.

In gleicher Weise sind die Kugeln bzw. Wälzkörper 5 außen in einer Außenhülse 7 geführt, die eine triovale Querschnittskontur oder eine anders geartete Kontur aufweisen kann. Wichtig ist auch hier, dass die äußeren Führungsabschnitte 8 axial gleichmäßig verlaufen und im Querschnitt einen Kreissegmentabschnitt aufweisen, dessen Radius dem Radius der Wälzkörper 5 entspricht, so dass diese über einen definierten Bereich umfasst und geführt sind, wodurch die wirksame Flächenpressung zwischen Wälzkörpern 5 und Außenhülse 7 bzw. dessen Führungsabschnitten 8 gegenüber einer herkömmlichen, hohlzylindrisch geformten Axiallagerung deutlich reduziert ist.

Ein Käfig 9 dient zur exakten Führung der Wälzkörper 5 zwischen Innenblech 4 und Außenhülse 7 sowie zur Sicherstellung eines gleichmäßigen Abstandes zwischen den Wälzkörpern 5.

Anhand der Darstellung der Fig. 1 wird unmittelbar deutlich, dass zur spielfreien Fixierung der trioval geformten Außenhülse 7 in der hohlzylindrisch geformten Innenmantelfläche des Getriebegehäuses 3 ein erhöhter Fertigungsaufwand notwendig wäre, wenn bspw. die Außenkontur der Außenhülse 7 in die Innenkontur des Getriebegehäuses 3 eingearbeitet werden sollte, was in der Regel nur durch stoßende Verfahren erfolgen kann. Dieser erhöhte Bearbeitungsaufwand wird in der vorliegenden Ausführungsvariante dadurch vermieden, dass zwischen Außenkontur der nicht zylindrisch geformten Außenhülse 7 zur Führung der Wälzkörper 5 und der Innenkontur der zylindrisch geformten Bohrung des Getriebegehäuses 3 eine Adapterhülse 10 angeordnet ist, die einerseits dem Ausgleich der unterschiedlichen Konturen dient, und die andererseits eine durchaus erwünschte Dämpfungswirkung liefern kann, um die Übertragung von Geräuschen und Vibrationen zwischen Getriebegehäuse 3 und Schaltschiene 2 zu reduzieren.

Mit Hilfe dieser zusätzlichen Adapterhülse 10 wird eine Wälzlagerung 1 geliefert, die hinsichtlich der Geräuschübertragung zwischen den gegeneinander beweglichen Teilen optimiert ist. Die Adapterhülse 10 wirkt somit als Dämpfungselement und ist vorzugsweise aus einem elastischen Werkstoff gefertigt, der die Geräusch- und Vibrationsübertragung zwischen Schaltschiene 2 und Getriebegehäuse 3 dämpfen kann. Eine besonders gute Dämpfungswirkung lässt sich erzielen, wenn die Adapterhülse aus einem elastischen Werkstoff mit exakt abgestimmtem Elastizitätsverhalten gefertigt ist. Als solcher Werkstoff kommt bspw. ein thermoplastischer Kunststoff mit ausreichender Elastizität bzw. mit ausreichenden Dämpfungseigenschaften in Frage. Insbesondere kommt als geeigneter Werkstoff jedoch auch ein elastomerer Kunststoff mit ausreichender Festigkeit in Frage, so dass die notwendigen elastischen Eigenschaften in ausreichendem Maße gewährleistet sind.

Gerade diese Elastizität führt zu einem weiteren Vorteil der Erfindung, nämlich der Möglichkeit des Ausgleichs von Fluchtungsfehlern gegenüber liegend angeordneter Schaltschienen- oder Schaltstangenlagerungen. Fluchtungsfehler rufen Verspannungen innerhalb der Lagereinheit und damit eine starke Überhöhung der Pressung der Wälzkörper auf die Laufbahnoberflächen hervor, wodurch die zulässige Lagerbelastung überschritten werden kann, was damit zur Beschädigung oder Zerstörung des Lagers führen kann.

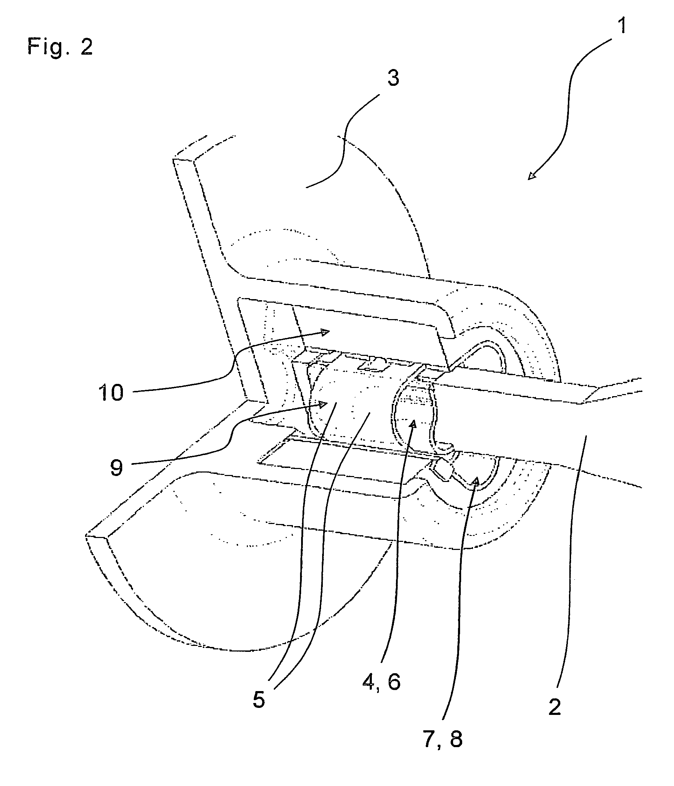

Die Fig. 2 verdeutlicht nochmals die bereits zur Fig. 1 erwähnten Bauteile der Wälzlagerung in perspektivischem Teillängsschnitt. Gleiche Teile wie in Fig. 1 sind mit gleichen Bezugsziffern bezeichnet, so dass sich eine nochmalige Erläuterung erübrigt. Es sind in dieser Darstellung insbesondere nochmals die räumlichen Anordnungen der einzelnen Bauteile zueinander verdeutlicht, wie bspw. das Innenblech 4 zur inneren Führung und die Außenhülse 7 zur äußeren Führung der Wälzkörper 5. Die elastische Adapterhülse 10 ist stellenweise relativ dick, während sie in den Bereichen mit den sich nach außen wölbenden äußeren Führungsabschnitten 8 relativ dünn ist. Die Materialstärke an diesen dünneren Stellen ist zweckmäßigerweise so zu bemessen, dass eine ausreichende Elastizität für eine Vibrations- und Geräuschdämpfung verbleibt.

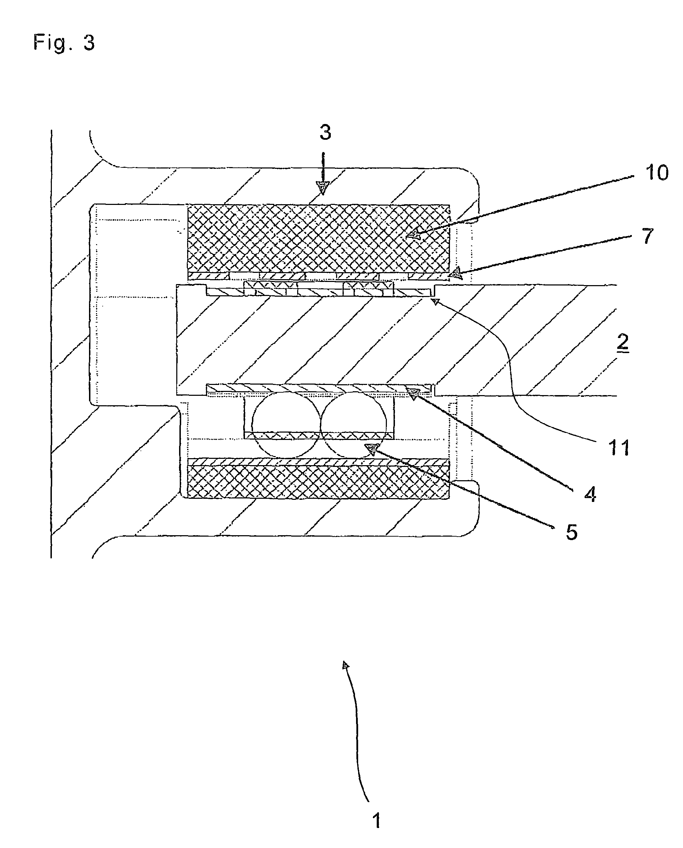

Die schematische Längsschnittdarstellung der Fig. 3 verdeutlicht eine erste Variante der Wälzlagerung 1, bei der das Innenblech 4 in eine entsprechende Ausnehmung 11 an der Außenmantelfläche der Schaltschiene 2 eingebracht ist. Die Ausnehmung 11 weist eine Tiefe auf, die ungefähr der Stärke des Innenblechs 4 entspricht. Die übrigen Teile entsprechen den bereits zuvor erläuterten Bauteilen entsprechend der Figuren 1 und 2.

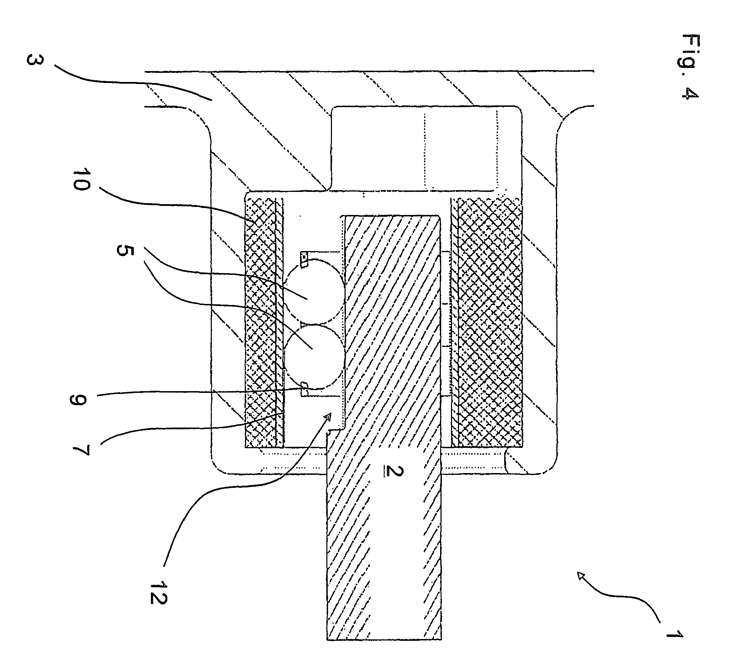

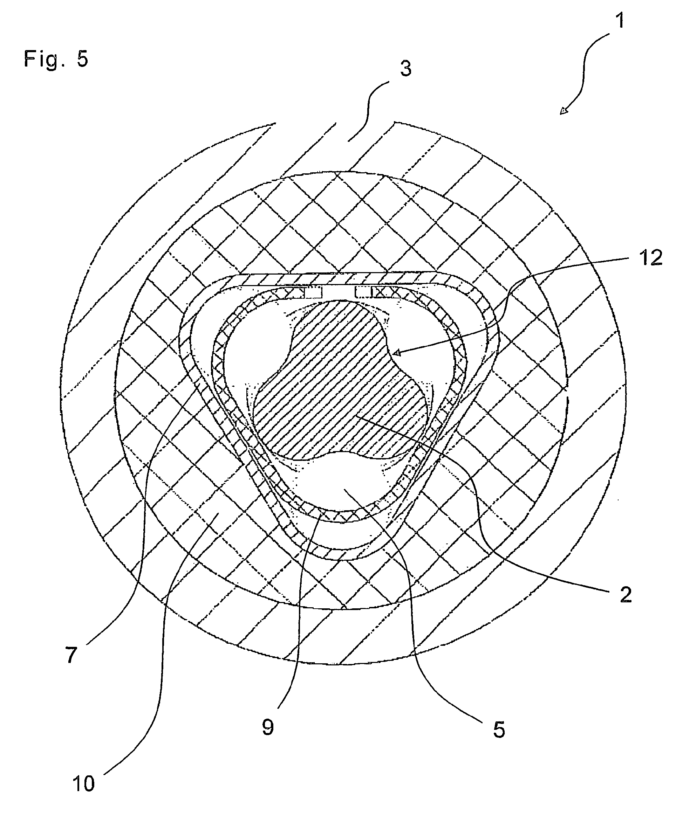

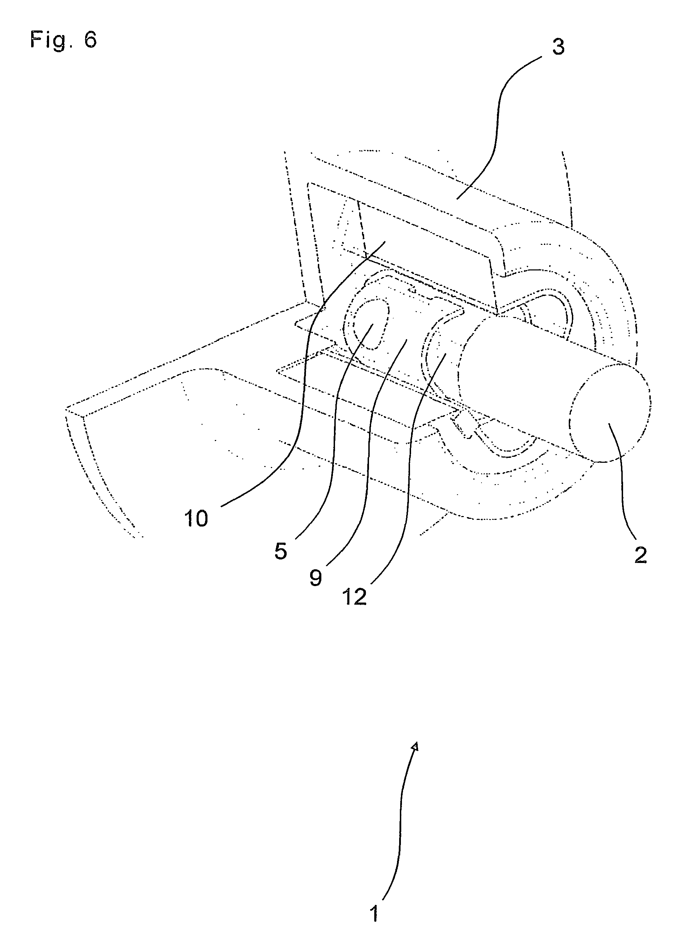

Die schematische Längsschnittdarstellung der Fig. 4 und die Querschnittsdarstellung der Fig. 5 verdeutlichen eine alternative Variante der Wälzlagerung 1, bei der auf ein Innenblech verzichtet ist und anstelle der inneren Lagerschale entsprechende rinnenförmige Führungsausnehmung 12 an der Außenmantelfläche der Schaltschiene 2 eingebracht sind. Die Führungsausnehmungen 12 können jeweils eine Tiefe aufweisen, die ungefähr der Stärke des Innenblechs 4 entsprechend der ersten Variante entspricht. Die übrigen Teile entsprechen den bereits zuvor erläuterten Bauteilen entsprechend der Figuren 1 bis 3. Fig. 6 verdeutlicht diese alternative Variante nochmals in perspektivischer Darstellung.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 1: Wälzlagerung
- 2: Schaltschiene, Schaltstange
- 3: Getriebegehäuse
- 4: Innenblech
- 5: Wälzkörper
- 6: innerer Führungsabschnitt
- 7: Außenhülse
- 8: äußerer Führungsabschnitt
- 9: Käfig
- 10: Adapterhülse
- 11: Ausnehmung
- 12: Führungsausnehmung

## Patentansprüche

1. Wälzlagerung (1) für axial gegeneinander verschiebbare Bauteile, insbesondere für Schaltschienen (2) oder Schaltstangen von Kraftfahrzeuggetrieben, mit wenigstens zwei Reihen von jeweils fluchtend in Verschiebungsrichtung der Bauteile angeordneten Wälzkörpern (5), die jeweils in Laufbahnen (6, 8) wälzen, welche die Außenkontur der Wälzkörper (5) teilweise umschließen, wobei
- die Außenhülse (7) zur äußeren Führung der Wälzkörper (5) einen triovalen oder in der Anzahl der Laufbahnen mit der Anzahl der Laufbahnen im Innenblech (4) korrespondierenden Querschnitt mit abschnittsweise kreissegmentförmigen Führungen (8) bzw. Laufbahnen für die Wälzkörper (5) aufweist und
- die Innenkontur drei oder mehr im Querschnitt abschnittsweise kreissegmentförmige Führungen (6) bzw. Laufbahnen für die Wälzkörper (5) aufweist, **dadurch gekennzeichnet, dass**
- die Außenhülse (7) über eine Adapterhülse (10) mit zylindrischer Außenmantelfläche in einem ersten Bauteil, einem Gehäuse (3), fixiert ist.

2. Wälzlagerung nach Anspruch 1, **dadurch gekennzeichnet, dass** die Wälzkörper (5) jeweils Kugeln sind, die jeweils in Laufbahnen (6, 8) geführt sind, die im Querschnitt Kreisringsegmente aufweisen, die mit den Durchmessern der Wälzkörper (5) korrespondieren.

3. Wälzlagerung nach einem der Ansprüche 1 bis 2, **dadurch gekennzeichnet, dass** ein zweites Bauteil eine axial gegenüber dem ersten Bauteil bzw. dem Gehäuse verschiebbare Stange oder Schaltschiene ist, die eine Innenkontur zur Führung der Wälzkörper aufweist.

4. Wälzlagerung nach einem der Ansprüche 1 bis 3, **dadurch gekennzeichnet, dass** die Bauteile drei radial angeordnete Reihen von jeweils fluchtend in Verschiebungsrichtung der Bauteile angeordnete Wälzkörper (5) aufweisen.

5. Wälzlagerung nach einem der Ansprüche 1 bis 4, **dadurch gekennzeichnet, dass** die Adapterhülse (10) in einer hohlzylindrischen Bohrung des ersten Bauteils bzw. Gehäuses (3) spielfrei fixiert ist.

6. Wälzlagerung nach einem der Ansprüche 1 bis 5, **dadurch gekennzeichnet, dass** die Adapterhülse (10) eine Innenkontur aufweist, die der Au-βenkontur der Außenhülse (7) zur Führung der Wälzkörper (5) entspricht, und dass die Außenhülse (7) spielfrei in der Adapterhülse (10) fixiert ist.

7. Wälzlagerung nach einem der Ansprüche 1 bis 6, **dadurch gekennzeichnet, dass** die Adapterhülse (10) aus einem elastischen Werkstoff gefertigt ist.

8. Wälzlagerung nach einem der Ansprüche 1 bis 7, **dadurch gekennzeichnet, dass** die Innenkontur zur Führung der Wälzkörper (5) durch ein Innenblech (4) gebildet ist, der am Außenumfang des zweiten Bauteils bzw. der Stange oder Schaltschiene (2) fixiert ist.

9. Wälzlagerung nach einem der Ansprüche 1 bis 8, **dadurch gekennzeichnet, dass** die Innenkontur zur Führung der Wälzkörper (5) durch Längsnuten (12) gebildet sind, die in den Außenumfang des zweiten Bauteils bzw. der Stange oder Schaltschiene (2) eingebracht sind.

10. Wälzlagerung nach einem der Ansprüche 1 bis 9, **dadurch gekennzeichnet, dass** die Wälzkörper (5) durch einen Käfig (9), insbesondere durch einen ringförmigen Blechkäfig gehalten und in ihrer Lage zueinander fixiert sind.

## Claims

1. Anti-friction bearing (1) for components which can be displaced axially with respect to one another, in particular for selector rails (2) or selector rods of motor-vehicle gearboxes, having at least two rows of rolling bodies (5) which are arranged in each case so as to be aligned in the displacement direction of the components and roll in each case in raceways (6, 8) which partially enclose the outer contour of the rolling bodies (5),
- the outer sleeve (7) having, for the outer guidance of the rolling bodies (5), a cross section which is tri-oval or corresponds in terms of the number of raceways with the number of raceways in the inner plate (4), with guides (8) or raceways, in the shape of circular segments in sections, for the rolling bodies (5), and
- the inner contour having three or more guides (6) or raceways, with a cross section in the shape of circular segments in sections, for the rolling bodies (5), **characterized in that**
- the outer sleeve (7) is fixed in a first component, a housing (3), via an adapter sleeve (10) with a cylindrical outer circumferential face.

2. Anti-friction bearing according to Claim 1, **characterized in that** the rolling bodies (5) are in each case balls which are guided in each case in raceways (6, 8) which have, in cross section, circularly annular segments which correspond with the diameters of the rolling bodies (5).

3. Anti-friction bearing according to either of Claims 1 and 2, **characterized in that** a second component is a rod or selector rail which can be displaced axially with respect to the first component or the housing and has an inner contour for guidance of the rolling bodies.

4. Anti-friction bearing according to one of Claims 1 to 3, **characterized in that** the components have three radially arranged rows of rolling bodies (5) which are arranged in each case so as to be aligned in the displacement direction of the components.

5. Anti-friction bearing according to one of Claims 1 to 4, **characterized in that** the adapter sleeve (10) is fixed without play in a hollow-cylindrical hole of the first component or housing (3).

6. Anti-friction bearing according to one of Claims 1 to 5, **characterized in that** the adapter sleeve (10) has an inner contour which corresponds to the outer contour of the outer sleeve (7) for guidance of the rolling bodies (5), and **in that** the outer sleeve (7) is fixed without play in the adapter sleeve (10).

7. Anti-friction bearing according to one of Claims 1 to 6, **characterized in that** the adapter sleeve (10) is manufactured from an elastic material.

8. Anti-friction bearing according to one of Claims 1 to 7, **characterized in that** the inner contour for guidance of the rolling bodies (5) is formed by an inner plate (4) which is fixed on the outer circumference of the second component or the rod or selector rail (2).

9. Anti-friction bearing according to one of Claims 1 to 8, **characterized in that** the inner contour for guidance of the rolling bodies (5) is formed by longitudinal grooves (12) which are made in the outer circumference of the second component or the rod or selector rail (2).

10. Anti-friction bearing according to one of Claims 1 to 9, **characterized in that** the rolling bodies (5) are held and fixed in their position with respect to one another by a cage (9), in particular by an annular sheet-metal cage.

## Revendications

1. Palier à roulement (1) pour des composants déplaçables axialement les uns par rapport aux autres, en particulier pour des tiges de commande (2) ou des tiges de sélection de boites de vitesses de véhicules automobiles, comprenant au moines deux rangées de corps de roulement (5) disposés à chaque fois en affleurement dans la direction de déplacement des composants, qui roulent à chaque fois dans des pistes de roulement (6, 8) qui entourent partiellement le contour extérieur des corps de roulement (5),
- la douille extérieure (7) pour le guidage extérieur des corps de roulement (5) présentant une section transversale tri-ovale ou correspondant, en termes du nombre des pistes de roulement, au nombre des pistes de roulement dans la tôle interne (4), avec des guides (8) partiellement en forme de segments circulaires ou des pistes de roulement pour les corps de roulement (5) et
- le contour interne présentant trois ou plus de trois guides (6) partiellement en forme de segments circulaires ou pistes de roulement pour les corps de roulement (5), **caractérisé en ce que**
- la douille extérieure (7) est fixée par le biais d'une douille d'adaptateur (10) ayant une surface d'enveloppe extérieure cylindrique, dans un premier composant, un boîtier (3).

2. Palier à roulement selon la revendication 1, **caractérisé en ce que** les corps de roulement (5) sont dans chaque cas des billes, qui sont guidées dans des pistes de roulement (6, 8) qui présentent, en section transversale, des segments annulaires circulaires qui correspondent aux diamètres des corps de roulement (5).

3. Palier à roulement selon l'une quelconque des revendications 1 ou 2, **caractérisé en ce qu'**un deuxième composant est une tige ou une tige de commande déplaçable axialement par rapport au premier composant ou au boîtier, laquelle présente un contour interne pour le guidage des corps de roulement.

4. Palier à roulement selon l'une quelconque des revendications 1 à 3, **caractérisé en ce que** les composants présentent trois rangées disposées radialement de corps de roulement (5) disposés à chaque fois en affleurement dans la direction de déplacement des composants.

5. Palier à roulement selon l'une quelconque des revendications 1 à 4, **caractérisé en ce que** la douille d'adaptateur (10) est fixée sans jeu dans un alésage cylindrique creux du premier composant ou boîtier (3).

6. Palier à roulement selon l'une quelconque des revendications 1 à 5, **caractérisé en ce que** la douille d'adaptateur (10) présente un contour intérieur qui correspond au contour extérieur de la douille extérieure (7) pour le guidage des corps de roulement (5), et **en ce que** la douille extérieure (7) est fixée sans jeu dans la douille d'adaptateur (10).

7. Palier à roulement selon l'une quelconque des revendications 1 à 6, **caractérisé en ce que** la douille d'adaptateur (10) est fabriquée en un matériau élastique.

8. Palier à roulement selon l'une quelconque des revendications 1 à 7, **caractérisé en ce que** le contour intérieur pour le guidage des corps de roulement (5) est formé par une tôle interne (4) qui est fixée sur le pourtour extérieur du deuxième composant ou de la tige ou de la tige de commande (2).

9. Palier à roulement selon l'une quelconque des revendications 1 à 8, **caractérisé en ce que** le contour intérieur pour le guidage des corps de roulement (5) est formé par des rainures longitudinales (12) qui sont réalisées dans le pourtour extérieur du deuxième composant ou de la tige ou de la tige de commande (2).

10. Palier à roulement selon l'une quelconque des revendications 1 à 9, **caractérisé en ce que** les corps de roulement (5) sont maintenus par une cage (9), notamment par une cage en tôle annulaire, et sont fixés en position les uns par rapport aux autres.
